# EUROPÄISCHE PATENTANMELDUNG

(11) **EP 2 112 745 A1**
(43) Veröffentlichungstag der Anmeldung: **28.10.2009**
(21) Anmeldenummer: 08007705.0
(22) Anmeldetag: 21.04.2008
(51) Int. Cl.: H02K 3/24

(54) **Verfahren zur Kühlung eines elektrischen Leiters**

(71) Anmelder: SIEMENS AKTIENGESELLSCHAFT, 80333 München (DE)
(72) Erfinder: Amedick, Volker, 47198 Duisburg (DE); Blinn, Axel, 45131 Essen (DE); Cravero, Leandro, Dr., 45479 Mülheim an der Ruhr (DE); Dahlke, Stefan, 45481 Mülheim an der Ruhr (DE); Evers, Christoph, 45721 Haltern am See (DE); Langmann, Axel, 58642 Iserlohn (DE); Völker, Stefan, Dr., 47447 Moers (DE)

(57) **Zusammenfassung**

Die Erfindung betrifft ein Verfahren zur Kühlung eines elektrischen Leiters (4), wobei ein Distanzelement (8) am elektrischen Leiter (4) angeordnet wird, wobei das Distanzelement (8) einen Kühlkanal (20) aufweist, durch den ein Kühlkanal-Kühlmedium (21) strömt und aus in dem Distanzelement (8) enthaltenen Austrittsbohrungen (22) ausströmt und den elektrischen Leiter (4) kühlt.

## Beschreibung

Die Erfindung betrifft ein Distanzelement zur Abstandshaltung zweier Komponenten, wobei das Distanzelement eine Grundplatte aufweist sowie auf der Grundplatte angeordnete Distanzvorsprünge.

Des Weiteren betrifft die Erfindung ein Verfahren zur Kühlung zweier elektrischer Leiter, wobei zwischen den beiden Leitern ein Distanzelement angeordnet wird.

Unter einer dynamoelektrischen Maschine im Sinne der vorliegenden Anmeldung wird jeder Energiewandler verstanden, der elektrische in mechanische Energie oder mechanische in elektrische Energie umwandelt. Insbesondere ist unter einer dynamoelektrischen Maschine ein Generator zur elektrischen Energieversorgung zu verstehen.

Ein Generator als Ausführungsform einer elektrischen Maschine besteht unter anderem aus elektrisch aktiven Teilen, zu denen ein Stator und ein drehbar gelagerter Rotor gehören. Der Stator umfasst mehrere aufeinander geschichtete Segmentplatten, die auch als Segmentbleche oder Eisenbleche bezeichnet werden. Die Segmentbleche sind mit Nuten zur Aufnahme von Wicklungen versehen. Eine hohe Magnetisierbarkeit und kleine Hysterese- oder Wirbelstromverluste der Segmentbleche sind von Vorteil. Durch dünne Papier-, Lack- oder Oxidschichten werden die Segmentbleche gegeneinander isoliert. Ein komplett ausgebildeter Stator besteht aus vielen Segmentblechen. Das Gebilde der aufeinander gestapelten Segmentbleche wird auch als Blechpaket bezeichnet.

Um die Erwärmung des Generators zu begrenzen, müssen der Stator und der Läufer gekühlt werden. Es gibt im Wesentlichen drei wichtige Arten der Kühlung: Frischluftkühlung: über ein Gebläse wird Frischluft angesaugt, durch entsprechende Filter gereinigt und in den Generator eingeblasen. Geschlossener Kreislauf: die gereinigte Luft wird in einem geschlossenen Kreislauf durch den Generator geblasen und in Wärmetauschern durch Kühlwasser wieder abgekühlt. Die Abwärme kann auch zu Heizzwecken verwendet werden. Reinwasserkühlung: bei Generatoren mit großer Leistung wird eigens aufbereitetes Wasser durch den Generator in einen geschlossenen Kreislauf geleitet. Wasserstoffkühlung: der in einem Kreislauf bewegte gasförmige Wasserstoff gibt über die an den Seiten der Generatoren angebrachte Wasserkühler die Verlustwärme ab. Das Gehäuse der Generatoren muss dabei gasdicht und druckfest ausgeführt sein, um einer eventuellen Knallgasexplosion standhalten zu können. Die Verwendung von Wasserstoffgas anstelle der Luft bewirkt geringere Gasreibungsverluste und doppeltes Wärmeabfuhrvermögen.

Es ist seit langem allgemein bekannt, die Verlustwärme in Generatoren mittels Kühlgas abzuführen. Hierbei wurde ursprünglich als Kühlgas Luft vorgesehen. Allerdings sind luftgekühlte Generatoren nur für niedrige Leistungen bis max. 300 MVA vorgesehen, da die mit Luft erzielbare Kühlwirkung zwangsläufig begrenzt ist und daher bei höheren Leistungen mit Luft nicht die erforderliche Kühlung gewährleistet ist.

Für Generatoren höherer Leistung wird als Kühlmedium bevorzugt Wasserstoffgas (H₂) eingesetzt, welches gegenüber Luft eine deutlich höhere Kühlleistung ermöglicht, die erhöht werden kann, indem man das Wasserstoffgas unter Druck setzt und die Kühlung unter Überdruck durchführt. Da Wasserstoff eine höhere Wärmekapazität und eine höhere Wärmeleitfähigkeit als Luft aufweist, kann durch die Füllung des Generatorgehäuses mit Wasserstoff die Wärme besser vom Generator abgeleitet werden, als dies mit Luft möglich wäre. Allerdings erfordert die Kühlung mit Wasserstoffgas einen zusätzlichen, nicht unbeträchtlichen Aufwand, der sich sowohl bei der Anschaffung als auch später im Betrieb kostenmäßig auswirkt.

Ein Begleitproblem bei der Generatorkühlung mit Wasserstoffgas sind die praktisch unvermeidbaren Verluste an Wasserstoffgas, hauptsächlich infolge von Leckagen an der Wellendurchführung der Rotorwelle durch das Gehäuse des Generators. Um diese Verluste zu verhindern oder zumindest niedrig zu halten, sind die Wellendurchführungen jeweils mit einer Wellendichtung versehen, die als Ölbad-Abdichtung ausgebildet sind. Ein weiteres Problem ist die Feuchtigkeit des Wasserstoffkühlgases. Während einer Inbetriebnahme oder während einer Revision sind in der Regel die Isolationsbauteile des Generators der Luftatmosphäre ausgesetzt. Das führt dazu, dass Feuchtigkeit aus der Luft von den Isolationsbauteilen aufgenommen wird. Während des Betriebs des Generators unter Wasserstoffkühlgas-Atmosphäre wird durch die in den Isolationsbauteilen angesammelte Luftfeuchtigkeit an den Wasserstoff abgegeben.

Bei luftgekühlten Generatoren zirkuliert die Luft im Generatorgehäuse und durch die Spulen im Stator. Die Ventilatoren sind direkt auf dem Rotor aufgebracht. Das Kühlgas strömt in der Regel über eine Leitvorrichtung, die auch als Kompressordiffusor bezeichnet werden kann, aus einer im Wesentlichen radialen Richtung in den Generator hinein, wobei der Kompressordiffusor dem Stator zugeordnet werden kann und daher kein drehbares Bauteil ist. Das Kühlgas wird anschließend über ein auf dem Rotor angeordnetes Kompressorlaufrad umgelenkt und ggf. verdichtet, wodurch ein Kühlgas mit optimalen physikalischen Parametern zur Kühlung des Rotors erreicht wird. Die zur Verfügung stehenden Strömungsquerschnitte für das Kühlgas im Kompressordiffusor als auch im Kompressorlaufrad sind in Strömungsrichtung aufeinander angepasst. Allerdings kann im Betrieb eine Kraft auf den Rotor wirken, die dazu führt, dass der Rotor in einer axialen Richtung verschoben wird. Bei einem Einsatz des Generators im Rahmen eines Turbosatzes rührt die Kraft von dem Turbinenschub der Dampfturbine bzw. der Gasturbine. Das Verschieben des auf den Rotor befindlichen Kompressorlaufrades gegenüber dem Kompressordiffusor führt allerdings dazu, dass die Strömungsquerschnitte gegeneinander versetzt sind, so dass keine optimalen Strömungsverhältnisse für das Kühlgas vorherrschen.

Um eine effektive Kühlung des Leiters zu erhalten wäre es von Vorteil, wenn die Wärmeübertragung des Kühlmediums auf die Leiteroberfläche verbessert ist. Die unbehandelte, ebene und glatte Oberfläche der Distanzelemente sind aus kühltechnischer Sicht verbesserungsfähig. Wünschenswert wäre es, eine verbesserte Vermischung der Hauptkühlströmung, die sich entlang der Leiteroberfläche bewegt, derart zu beeinflussen, dass eine Strömungsgrenzschicht auf der benetzten Leiteroberfläche verhindert wird. Eine günstige Wärmeabfuhr wird verhindert, wenn innerhalb der Grenzschicht der Temperaturgradient zur Wand gering ist.

An dieser Stelle setzt die Erfindung an, deren Aufgabe es ist, eine verbesserte Kühlungsmöglichkeit eines Leiters anzugeben.

Gelöst wird diese Aufgabe durch ein Distanzelement zur Abstandshaltung zweier Komponenten, wobei das Distanzelement eine Grundplatte aufweist sowie auf der Grundplatte angeordnete Distanzvorsprünge, wobei die Grundplatte einen Kühlkanal zur Versorgung mit Kühlmedium aufweist, wobei die Grundplatte Austrittsbohrungen aufweist, die den Kühlkanal mit einem zwischen der Komponente und einer Grundplattenoberfläche befindlichen Strömungsraum strömungstechnisch verbindet.

Es wird somit vorgeschlagen, die aus dem Stand der Technik bekannten Distanzelemente weiter zu modifizieren, in der Weise, dass in die Grundplatte ein Kühlkanal angeordnet wird, durch den ein Kühlmedium durchströmbar ist. Außerhalb der Grundplatte, d.h. zwischen der Grundplattenoberfläche und dem elektrischen Leiter strömt nach wie vor ein Teil des Kühlmediums und kühlt dadurch den elektrischen Leiter. Das durch die Grundplatte in den Kühlkanälen strömende Strömungsmedium wird über Austrittsbohrungen, die in der Grundplatte angeordnet werden, in Richtung der Kühlmediumströmung außerhalb der Grundplatte umgelenkt. Eine sich zwischen dieser außerhalb der Grundplatte befindlichen Kühlmediumströmung ausgebildeten Grenzschicht wird durch die aus den Austrittsbohrungen heraustretende Kühlmediumströmung beeinflusst, so dass die Wärmeübertragung auf den elektrischen Leiter verbessert wird. Das aus den Austrittsbohrungen austretende Kühlmedium trifft sozusagen im Wesentlichen senkrecht auf den elektrischen Leiter, so dass die Kühlwirkung verbessert wird. Diese vorgenannte Art der Kühlung wird auch als Impingement cooling bezeichnet.

Vorteilhafte Weiterbildungen sind in den Unteransprüchen angegeben.

So ist es vorteilhaft, wenn die Grundplatte entlang einer Längsrichtung und der Kühlkanal im Wesentlichen entlang der Längsrichtung ausgebildet ist. Der Kühlkanal folgt somit der räumlichen Ausdehnung der Grundplatte, die sich im Wesentlichen länglich erstreckt. Ebenso in dieser länglichen Richtung strömt der außerhalb der Grundplatte strömende Kühlmediumstrom. Eine gute Kühlmöglichkeit wird erreicht, indem der Kühlkanal in Längsrichtung ausgebildet ist, um keine lokalen Temperaturerhöhungen zu ermöglichen.

In einer vorteilhaften Weiterbildung sind die Austrittsbohrungen im Wesentlichen senkrecht zur Längsrichtung ausgebildet. Ein direktes Auftreffen des Kühlmediums auf eine zu kühlende Fläche führt zu einem optimalen Kühleffekt. Wenn die Auftrittsrichtung parallel zur Flächennormalen der zu kühlenden Fläche erfolgt, ist die Kühlung nahezu ideal. Eine senkrecht ausgebildete Austrittsbohrung in der Grundplatte führt zu einer Strömung des im Kühlkanal befindlichen Kühlmediums parallel zur Normalen der zu kühlenden Leiteroberfläche, so dass die Kühlwirkung verbessert ist.

In einer vorteilhaften Weiterbildung ist der Kühlkanal derart ausgebildet, dass ein Kühlkanalende die Kühlmediumströmung dazu zwingt, durch die Austrittsbohrungen zu strömen. Dadurch wird gewährleistet, dass der Massendurchfluss des Kühlmediums vollständig durch die Austrittsbohrungen erfolgt, da das Kühlmedium daran gehindert wird, einen anderen Weg einzuschlagen als durch die Austrittsbohrungen.

In einer weiteren vorteilhaften Weiterbildung weist der Kühlkanal einen rechteckigen Querschnitt auf. Dies führt zu einem optimalen Strömungsverlauf des Kühlmediums im Kühlkanal, was zu einer verbesserten Kühlwirkung auf der Leiteroberfläche führt.

Die Erfindung wird anhand eines Ausführungsbeispiels näher erläutert.

Es zeigen:
- Figur 1: eine perspektivische Querschnittsansicht eines Rotors einer dynamoelektrischen Maschine,
- Figur 2: eine perspektivische Ansicht eines Distanzelemen- tes,
- Figur 3: eine perspektivische Ansicht des Distanzelementes mit einer teilweisen Querschnittsdarstellung des Kühlkanals,
- Figur 4: eine Draufsicht auf zwei zu kühlende elektrische Leiter.

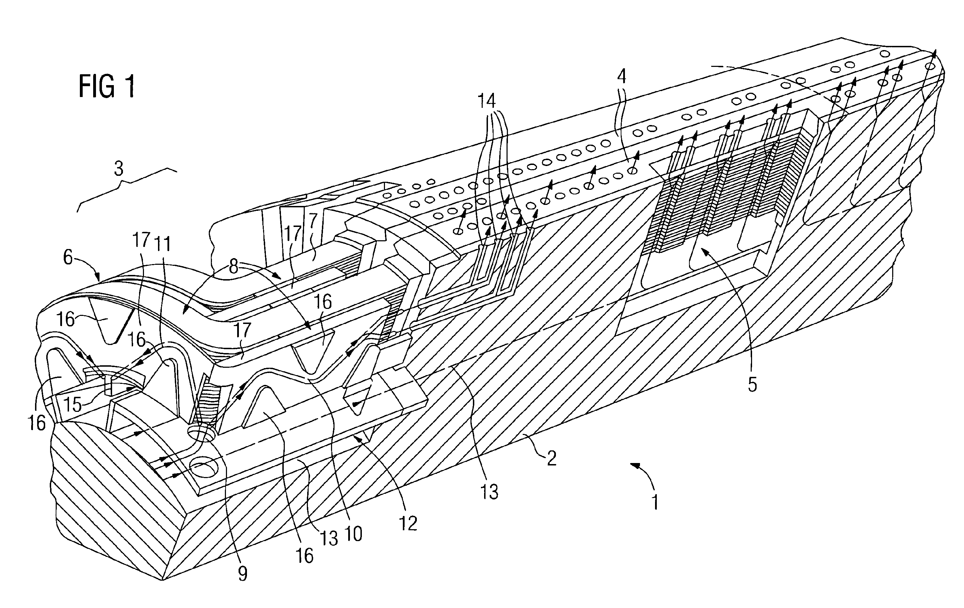

Die Figur 1 zeigt einen Ausschnitt eines Rotors 1 einer dynamoelektrischen Maschine. Der Rotor 1 umfasst einen Rotorballen 2. Der Rotor 1 ist um eine nicht näher dargestellte Rotationsachse drehbar gelagert. Stirnseitig ist ein Wickelkopf 3 angeordnet. Des Weiteren umfasst der Rotor 1 auf einem Umfang verteilte elektrische Leiter 4. Die elektrischen Leiter 4 sind in Nuten angeordnet und weisen in radialer Richtung angeordnete Kühlbohrungen 5 auf. Der Wickelkopf 3 umfasst einen Querleiter 6, der in Umfangsrichtung angeordnet ist sowie einen Axialleiter 7, der in axialer Richtung ausgerichtet ist. Der Axialleiter 7 und der Querleiter 6 werden aus einem elektrisch leitfähigen Material gefertigt. Zwischen dem Axialleiter 7 und dem Querleiter 6 sind Distanzelemente 8 angeordnet. Die Distanzelemente 8 ermöglichen zum einen eine genaue Positionierung der Querleiter 6 bzw. Axialleiter 7 in einem bestimmten Abstand voneinander sowie eine Kühlung der Querleiter 6 bzw. Axialleiter 7, indem über eine Kühlmediumzuführung 9 Kühlmedium entlang der Distanzelemente 8 strömt. Das über die Kühlmediumzuführung 9 zuströmende Kühlmedium teilt sich in einen Axialteilstrom 10 auf, der entlang dem Axialleiter 7 strömt und einen Querleitteilstrom 11, der entlang des Querleiters 6 strömt. Des Weiteren umfasst der Rotor 1 eine weitere Kühlmediumzuführung unterhalb eines Nutgrundmantels 12. Unter dem Nutgrundmantel 12 ist ein Nutgrundkühlkanal 13 ausgebildet, der eine strömungstechnische Verbindung mit den Kühlbohrungen 5 aufweist. Durch den Nutgrundkühlkanal 13 strömt Kühlmedium entlang, das schließlich über die Kühlbohrungen 5 wieder austritt, wodurch die elektrischen Leiter 4 gekühlt werden.

Der entlang der Distanzelemente 8 strömende Kühlstrom tritt zum einen über stirnseitig am elektrischen Leiter 4 angeordnete Stirnkühlbohrungen 14 aus und über einen weiteren Nutgrundkühlkanal 15 in den Rotor 1 ein. Der Axialteilstrom 10 und der Querleitteilstrom 11 strömen mäanderförmig zwischen Distanzvorsprüngen 16 entlang.

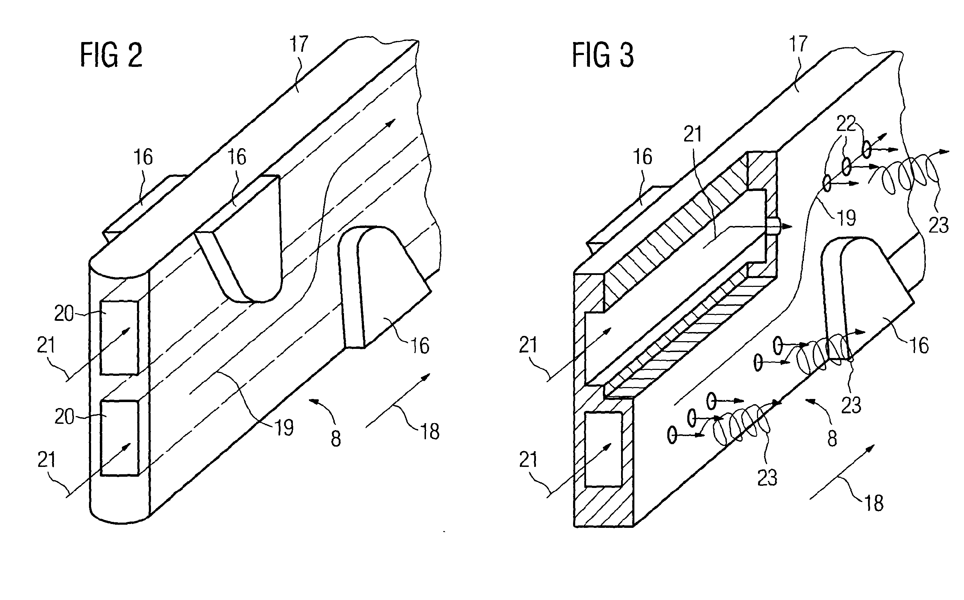

In der Figur 2 ist eine vergrößerte Darstellung des Distanzelementes 8 zu sehen. Das Distanzelement 8 umfasst eine Grundplatte 17. Die Grundplatte 17 ist in einer länglichen Richtung 18 ausgebildet. Ein Kühlmediumstrom 19 strömt entlang einer Oberfläche der Grundplatte 17 zwischen den Distanzvorsprüngen 16 mäanderförmig entlang. Des Weiteren weist die Grundplatte 17 einen Kühlkanal 20 auf, wobei in dem in der Figur 2 dargestellten Ausführungsbeispiel zwei Kühlkanäle 20 ausgebildet sind. Durch diesen Kühlkanal 20 strömt jeweils ein Kühlkanal-Kühlmedium 21 entlang der länglichen Richtung 18.

Wie in der Figur 3 dargestellt weist die Grundplatte 17 Austrittsbohrungen 22 auf, durch die das Kühlkanal-Kühlmedium 21 ausströmen kann. Das aus den Austrittsbohrungen 22 ausströmende Kühlkanal-Kühlmedium 21 vermischt sich mit dem Kühlmediumstrom 19 und führt zu einer wirbelstromartigen Verwirbelung 23. Die Austrittsbohrungen 22 sind im Wesentlichen senkrecht zur länglichen Richtung 18 ausgebildet. Des Weiteren weist der Kühlkanal 20 ein nicht näher dargestelltes Kühlkanalende auf, was dazu führt, dass der gesamte durch den Kühlkanal 20 strömende Kühlkanalmediumstrom aus den Austrittsbohrungen 22 strömt.

Der Querschnitt des Kühlkanals 20 ist vorzugsweise rechteckig ausgebildet.

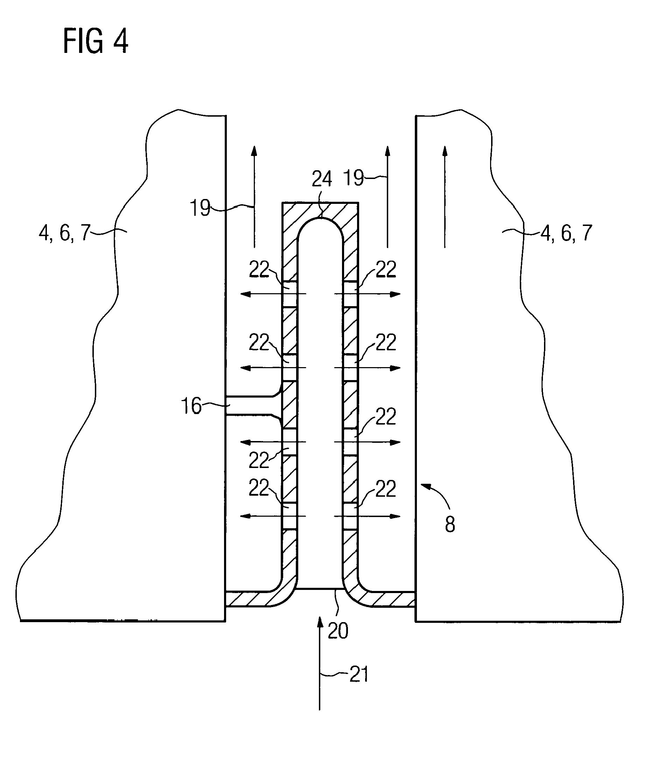

In der Figur 4 ist zu sehen, wie das Kühlkanal-Kühlmedium 21 in den Kühlkanal 20 strömt und aus den Austrittsbohrungen 22 wieder ausströmt und nahezu senkrecht auf die zu kühlende Komponente trifft, die der elektrische Leiter 4, der Querleiter 6 oder der Axialleiter 7 sein kann. Diese Kühlung, bei der ein Kühlmedium senkrecht auf die zu kühlende Fläche trifft, wird auch als Impingement cooling bezeichnet. Das Kühlkanal-Kühlmedium 21 wird durch das Kühlkanalende 24 dazu gezwungen, sozusagen komplett aus den Austrittsbohrungen 22 zu strömen, so dass kein Kühlmediumverlust eintritt.

Impingement cooling wird auch als Prallkühlmethode bezeichnet, die eine sehr effektive Kühlmethode darstellt. Durch den Einsatz der Prallkühlmethode wird ein deutlich höherer Wärmeübergang zwischen dem Kühlmedium und den zu kühlenden Komponenten erzielt als bei der aktuellen rein konvektiven Kühlung. Dadurch wird die Temperatur in den zu kühlenden Komponenten verringert.

## Patentansprüche

1. Distanzelement zur Abstandshaltung zweier Komponenten, wobei das Distanzelement (8) eine Grundplatte (17) aufweist sowie auf der Grundplatte (17) angeordnete Distanzvorsprünge (16),
**dadurch gekennzeichnet, dass**
die Grundplatte (17) einen Kühlkanal (20) zur Versorgung mit Kühlmedium aufweist,
wobei die Grundplatte (17) Austrittsbohrungen (22) aufweist, die den Kühlkanal (20) mit einem zwischen der Komponente und einer Grundplattenoberfläche befindlichen Strömungsraum strömungstechnisch verbindet.

2. Distanzelement nach Anspruch 1,
wobei die Grundplatte (17) entlang einer Längsrichtung (18) ausgebildet ist und der Kühlkanal (20) im Wesentlichen entlang der Längsrichtung (18) ausgebildet ist.

3. Distanzelement nach Anspruch 1 oder 2,
wobei die Austrittsbohrungen (22) im Wesentlichen senkrecht zur Längsrichtung (18) ausgebildet sind.

4. Distanzelement nach einem der vorhergehenden Ansprüche,
wobei der Kühlkanal (20) ein Kühlkanalende (24) aufweist.

5. Distanzelement nach einem der vorhergehenden Ansprüche,
wobei der Kühlkanal (20) derart ausgebildet ist,
dass ein im Betrieb in den Kühlkanal (20) hineinströmendes Kühlmedium aus den Austrittsbohrungen (22) strömt.

6. Distanzelement nach einem der vorhergehenden Ansprüche,
wobei der Kühlkanal (20) einen rechteckigen Querschnitt aufweist.

7. Verfahren zur Kühlung zweier elektrischer Leiter (4), wobei zwischen den beiden Leitern (4) ein Distanzelement (8) angeordnet wird,
wobei in diesem Distanzelement (8) ein Kühlkanal (20) derart angeordnet wird, dass ein Kühlmedium durch den Kühlkanal (20) strömt und über Austrittsbohrungen (22) ausströmt und dabei auf den elektrischen Leiter (4) prallt,
wobei ein weiterer Kühlmediumstrom (19) an dieser Oberfläche des Distanzelements (8) strömt und sich mit dem aus den Austrittsbohrungen (22) ausströmenden Kühlmedium vermischt.
